Europäisches Patentamt

European Patent Office

Office européen des brevets

(19)

(11) Veröffentlichungsnummer: **0 020 294**
B1

# (12) EUROPÄISCHE PATENTSCHRIFT

(45) Veröffentlichungstag der Patentschrift:
10.11.82

(21) Anmeldenummer: 80810143.0

(22) Anmeldetag: 30.04.80

(51) Int. Cl.³: **C 08 F 8/22, C 08 F 112/08**

(54) Verfahren zur Herstellung von bromierten Produkten des Polystyroles.

(30) Priorität: 07.05.79 CH 4256/79

(43) Veröffentlichungstag der Anmeldung:
10.12.80 Patentblatt 80/25

(45) Bekanntmachung des Hinweises auf die Patenterteilung:
10.11.82 Patentblatt 82/45

(84) Benannte Vertragsstaaten:
AT BE CH DE FR GB IT LI NL SE

(56) Entgegenhaltungen:
DE-A-2 537 385
DE-A-2 800 012

(73) Patentinhaber: CIBA-GEIGY AG, Patentabteilung
Postfach, CH-4002 Basel (CH)

(72) Erfinder: Kainmüller, Thomas, Dr., Am Hangweg 18,
D-6145 Lindenfels/Odenwald (DE)
Erfinder: Buxbaum, Lothar, Dr., Haus Litzelröder,
D-6145 Lindenfels/Odenwald (DE)

## Verfahren zur Herstellung von bromierten Produkten des Polystyroles

Die vorliegeden Erfindung betrifft ein Verfahren zur Herstellung von bromierten Produkten des radikalisch hergestellten Polystyroles, die hohe Bromgehalte aufweisen, durch direkte Bromierung.

Die Halogenierung von Polystyrolen ist für solche Fälle erwünscht, in denen die Endprodukte flammwidrige Eigenschaften aufweisen sollen. Im allgemeinen genügt hierfür ein relativ niedriger Bromgehalt. Soll dagegen halogeniertes Polystyrol als Flammschutzmittel anderen Kunststoffen einverleibt werden, sind hohe Bromgehalte günstig, um nur geringe Mengen des Mittels verwenden zu müssen. Die halogenierten Polystyrole sollen für diesen Verwendungszweck höchstens eine geringe Eigenfarbe und eine ausreichende Thermostabilität aufweisen.

Es hat sich als ungelöstes Problem erwiesen, durch radikalisch initiierte Polymerisation hergestellte Polystyrole bei niedrigen Temperaturen und relativ kurzen Reaktionszeiten direkt zu Produkten mit den erwähnten Eigenschaften zu bromieren, was jedoch äusserst wünschenswert ist, da der Einsatz von diesen handelsüblichen Polystyrolen wirtschaftlicher wäre. Die bekannten Schwierigkeiten bei der direkten Bromierung dieser Polystyrole in halogenhaltigen Lösungsmitteln bei niedrigen Temperaturen und in Gegenwart eines Lewis-Säure-Katalysators sind z.B. in der DE-AS Nr. 2537385 und DE-OS Nr. 2651435 beschrieben: Vorzeitige Fällung durch Gelbildung, geringer Bromgehalt der Produkte, starke Eigenfarbe und thermische Instabilität. Diese Nachteile werden gemäss dem genannten Stand der Technik dadurch überwunden, dass man selektiv hydrierte Oligomere des Styroles bzw. frisch durch kationische Polymerisation hergestelltes Polystyrol mit Brom umsetzt.

Aus CA 77, 75 880 k (1972) und CA 85, 6331 k (1976) ist bekannt, die direkte Bromierung von Polystyrol in CCl$_4$ bei höheren Temperaturen in Gegenwart von Eisen als Katalysator durchzuführen. In diesem physiologisch bedenklichen Lösungsmittel wird zwar eine vorzeitige Gelbildung verhindert, aber dafür bereits ein merklicher und unerwünschter Molekulargewichtsabbau des bromierten Polystyroles beobachtet. Ferner wurde gefunden, dass bei tieferen Temperaturen nur noch ein ungenügender Bromgehalt erzielt wird.

Aufgabe vorliegener Erfindung ist es, ein Verfahren zur direkten Bromierung von handelsüblichem, also durch radikalische Polymerisation hergestelltem Polystyrol aufzuzeigen, das die erwähnten Nachteile überwindet und thermisch stabile bromierte Produkte mit höchstens geringer Eigenfarbe, hohem Bromgehalt und guter Löslichkeit im Reaktionsmedium liefert.

Gegenstand vorliegender Erfindung ist ein Verfahren zur Herstellung von bromierten Produkten des Polystyrols mit mindestens 50 Gew.% Bromgehalt durch direkte Bromierung von radikalisch hergestelltem Polystyrol in Lösung und in Gegenwart eines Lewis-Säure-Katalysators bei niedrigen Temperaturen, das dadurch gekennzeichnet ist, dass man die Bromierung in teilhalogenierten Kohlenwasserstoffen als Lösungsmittel in Gegenwart zwei- und/oder dreiwertigen Eisensalzen als Katalysator bei Temperaturen von −30 bis +30° C durchführt.

Als Bromierungsmittel wird bei der direkten Bromierung bevorzugt Brom oder Chlorbrom eingesetzt. Das Chlorbrom kann z.B. in bekannter Weise dadurch erzeugt werden, dass man kontinuierlich Brom zugibt und einen Chlorgasstrom durch die Reaktionslösung leitet. Hierbei kann in geringem Umfang auch die Bildung von chlorhaltigen Endprodukten möglich sein.

Das erfindungsgemässe Verfahren bietet den besonderen Vorteil, dass gerade das hauptsächlich hergestellte und verkaufte Polystyrol eingesetzt werden kann. Die erfindungsgemäss hergestellten bromierten Polystyrole enthalten bevorzugt mindestens 55 Gew.%, besonders mindestens 60 Gew.% Brom. Der Polymerisationsgrad des eingesetzten Polystyroles ist bevorzugt mindestens 100 und liegt besonders zwischen 500 und 2500, insbesondere 1000 und 2500. Als Lösungsmittel werden teilhalogenierte Kohlenwasserstoffe verwendet. Diese können aromatischen und besonders aliphatischen oder cycloaliphatischen Charakter haben und haben noch mindestens ein Wasserstoffatom im Molekül. Als Halogene sind Brom, Fluor und besonders Chlor bevorzugt. Ferner ist die Verwendung leichtflüchtiger halogenierter Kohlenwasserstoffe vorteilhaft, da sie am leichtesten aus den erhaltenen Produkten zu entfernen sind. Beispiele für geeignete Lösungsmittel sind: Chloroform, Methylenchlorid, Dibrommethan, Chloräthan, Bromäthan, Dibromäthan, Chlorbenzol sowie entsprechend gemischt halogenierte Kohlenwasserstoffe oder Mischungen teilhalogenierter Kohlenwasserstoffe. Bevorzugt sind Methylenchlorid und 1,2-Dichloräthan.

Die Menge an eingesetztem Polystyrol ist für das Verfahren nicht kritisch. Zweckmässig wird eine Menge von 5 bis 60 Gew.% bezogen auf die Reaktionslösung eingesetzt.

Als Katalysator werden zwei- und/oder dreiwertige Eisensalze oder -oxide verwendet. Es kann sich hierbei sowohl um die Salze anorganischer und organischer Säuren wie auch um Komplexsalze handeln. Beispiele sind Eisenfluorid-, -chlorid, -bromid, -sulfat, -nitrat, -phosphat, -oxalat, -acetat oder -benzoat sowie Hexacyanoferrate und Eisenoxide wie Fe$_3$O$_4$. Bei den Eisenbromiden ist besonders vorteilhaft, diese *in situ* durch die Einwirkung von Brom auf Eisen zu bilden. In diesem Fall wird also Eisen eingesetzt und das katalytisch wirksame Eisenbromid bei der Bromierung gebildet. Normalerweise wird der Katalysator in einer Menge von 0,05 bis 20 Gew.%, bevorzugt 0,5 bis 5 Gew.% zugegeben, bezogen auf das eingesetzte Polystyrol.

Bevorzugt als Katalysatoren sind Eisenhalogenide, besonders FeCl₃ und Eisen. Man erzielt aber auch sehr gute Ergebnisse, wenn im erfindungsgemässen Verfahren diese Katalysatoren ausgenommen sind und andere Eisensalze eingesetzt werden.

Die Bromierungsreaktion wird bevorzugt bei Temperaturen von 0 bis 25°C in hierfür üblichen technischen Einrichtungen durchgeführt. Zur Vermeidung von Nebenreaktionen wird zweckmässig unter Lichtausschluss gearbeitet.

Die Durchführung der Reaktion kann z.B. so erfolgen, dass man das Polystyrol im teilhalogenierten Kohlenwasserstoff löst und danach den Katalysator, z.B. Eisenpulver zugibt. Hierauf wird unter Lichtausschluss, Rühren und Kühlen die erforderliche Menge Brom, gegebenenfalls im gleichen Lösungsmittel gelöst, langsam zugetropft. Zur Vervollständigung der Reaktion kann dann noch einige Zeit nachgerührt werden.

Die Aufarbeitung der Reaktionsmischung erfolgt nach üblichen Methoden. Überschüssiges Brom kann durch Reduktionsmittel wie z.B. wässrigen Hydrogensulfitlösungen entfernt werden. Danach wird die Reaktionslösung mit Wasser bromidfrei gewaschen. Das bromierte Polystyrol kann dann durch Entfernen des Lösungmittels z.B. mittels Destillation isoliert werden. Es ist aber auch möglich, das bromierte Polystyrol durch Zugabe von polaren Lösungsmitteln wie z.B. Alkoholen aus der Lösung zu fällen. Das isolierte bromierte Polystyrol kann dann noch zur vollständigeren Abtrennung des Lösungsmittels bei erhöhten Temperaturen und im Vakuum getrocknet werden.

Die nach dem erfindungsgemässen Verfahren hergestellten bromierten Polystyrole sind lösliche unvernetzte thermoplastische Produkte, die sich durch einen hohen Bromgehalt, eine geringe Eigenfarbe und eine sehr gute thermische Stabilität auszeichnen. Das erfindungsgemässe Verfahren führt überraschend zu diesen Produkten aus radikalisch polymerisiertem Polystyrol als einfachem Ausgangsprodukt. Diese bromierten Polystyrole eignen sich als Flammschutzmittel für Kunststoffe, besonders für Thermoplaste.

Die nachfolgenden Beispiele erläutern die Erfindung näher.

*Beispiel 1:*

26 g handelsübliches Polystyrol (Hostyren N 5000) werden in 600 ml Methylenchlorid gelöst. Nach Zugabe von 0,5 g Eisenpulver werden unter Lichtausschluss, Rühren und Kühlen 99,8 g Brom bei 0°C langsam zugetropft. Nach 6 h Rühren bei 0°C wird die Methylenchloridlösung bei Raumtemperatur mit 100 ml 3%iger Natriumhydrogensulfitlösung gerührt und anschliessend mit Wasser bromidfrei gewaschen (5×500 ml). Die Methylenchloridlösung wird dann unter Rühren in 1500 ml Methanol gegossen. Das ausgefallene Produkt wird abgesaugt und bei 60°C/1 mbar 12 h lang getrocknet. Man erhält 59 g bromiertes Polystyrol als farbloses Pulver mit einem Bromgehalt von 64,9 Gew.% Brom. Der thermogravimetrisch bestimmte Zersetzungsbeginn des Produkts liegt bei 315°C.

*Beispiel 2:*

26 g handelsübliches Polystyrol werden in 600 ml Methylenchlorid gelöst. Nach Zugabe von 1 g Eisenpulver werden unter Lichtausschluss, Rühren und Kühlen 99,8 g Brom bei 15 bis 20°C langsam zugetropft. Nach 6 h Rühren bei 15 bis 20°C wird das Reaktionsgemisch wie in Beispiel 1 bromidfrei gewaschen. Die Methylenchloridlösung wird eingedampft und das verbleibende Produkt noch 1 h bei 250°C/10 mbar gehalten. Man erhält 61 g leicht gelbliches bromiertes Polystyrol mit einem Bromgehalt von 64,4 Gew.% Brom. Der thermogravimetrisch bestimmte Zersetzungsbeginn liegt bei 325°C.

*Beispiel 3:*

26 g handelsübliches Polystyrol werden in 600 ml Dichloräthan gelöst. Nach Zugabe von 1 g Eisenpulver werden unter Lichtausschluss, Rühren und Kühlen 99,8 g Brom bei 15 bis 20°C langsam zugetropft. Nach 6 h Rühren bei 15 bis 20°C wird das Reaktionsgemisch wie in Beispiel 1 bromidfrei gewaschen. Das Ausfällen der Polymerlösung in Methanol liefert 58 g praktisch farbloses bromiertes Polystyrol mit einem Bromgehalt von 64,3 Gew.% Brom. Der thermogravimetrisch bestimmte Zersetzungsbeginn liegt bei 305°C.

*Beispiel 4:*

26 g handelsübliches Polystyrol werden in 600 ml Methylenchlorid gelöst. Nach Zugabe von 0,5 g Eisenpulver werden unter Lichtausschluss, Rühren und Kühlen 79,9 g Brom bei −10°C langsam zugetropft. Nach 24 h Rühren bei −10°C wird das Reaktionsgemisch wie in Beispiel 1 bromidfrei gewaschen. Das Ausfällen der Polymerlösung in Methanol liefert 55 g praktisch farbloses bromiertes Polystyrol mit einem Bromgehalt von 61,6 Gew.% Brom. Der thermogravimetrisch bestimmte Zersetzungsbeginn liegt bei 325°C.

*Beispiel 5:*

26 g handelsübliches Polystyrol werden in 300 ml Methylenchlorid gelöst. Nach Zugabe von 4 g FePO₄ werden unter Lichtausschluss, Rühren und Kühlen 79,9 g Brom bei 0°C langsam zugetropft. Nach 24 h Rühren bei 0°C wird das Reaktionsgemisch wie in Beispiel 1 bromidfrei gewaschen und ausgefällt. Man erhält 62 g bromiertes Polystyrol als gelbliches Pulver mit einem Bromgehalt von 62,4 Gew.% Brom. Der thermogravimetrisch bestimmte Zersetzungbeginn liegt bei 318°C.

*Beispiel 6:*

26 g handelsübliches Polystyrol werden in 300 ml Methylenchlorid gelöst. Nach Zugabe von 2 g getrocknetem (10 h/140°C/1 mbar) Feᴵᴵ-oxalat werden unter Lichtausschluss, Rühren und Kühlen bei 0°C innerhalb von 4 h 51,3 g Brom und 21,3 g Chlor zugesetzt. Die Zugabe der Halogene erfolgt dabei so, dass zuerst nur Brom (1 h), später Brom und Chlor gleichzeitig (2 h) und zuletzt nur Chlor (1 h) zugegeben werden. Nach 18 h Rühren wird das Reaktionsgemisch wie in Beispiel 1 bromidfrei gewaschen und aufgearbeitet. Man erhält 69,6 g bromiertes Polystyrol als gelbliches Pulver mit einem Halogengehalt von 63,3 Gew.% Brom und 0,9 Gew.% Chlor. Der thermogravimetrisch bestimmte Zersetzungsbeginn liegt bei 349°C.

*Beispiel 7:*

26 g handelsübliches Polystyrol werden in 300 ml Methylenchlorid gelöst. Nach Zusatz von 2 g feinteiligem Fe$_3$O$_4$ werden 51,3 g Brom und 21,3 g Chlor in der in Beispiel 6 beschriebenen Weise zugesetzt. Nach 18 h Rühren wird das Reaktionsgemisch wie in Beispiel 1 aufgearbeitet. Man erhält 72,6 g bromiertes Polystyrol als gelbliches Pulver mit einem Halogengehalt von 64,0 Gew.% Brom und 1,2 Gew.% Chlor. Der thermogravimetrisch bestimmte Zersetzungsbeginn liegt bei 334°C.

*Vergleichsbeispiel:*

25 g handelsübliches Polystyrol werden gemäss Beispiel 1 bromiert, aber als Lösungsmittel CCl$_4$ verwendet. Man erhält ein bromiertes Polystyrol mit nur 45 Gew.% Bromgehalt.

**Patentansprüche**

1. Verfahren zur Herstellung von bromierten Produkten des Polystyrols mit mindestens 50 Gew.% Bromgehalt durch direkte Bromierung von radikalisch hergestelltem Polystyrol in Lösung und in Gegenwart eines Lewis-Säure-Katalysators bei niedrigen Temperaturen, dadurch gekennzeichnet, dass man die Bromierung in teilhalogenierten Kohlenwasserstoffen als Lösungsmittel in Gegenwart zwei- und/oder dreiwertiger Eisensalze oder -oxide als Katalysator bei Temperaturen von −30°C bis +30°C durchführt.

2. Verfahren gemäss Anpruch 1, dadurch gekennzeichnet, dass teilchlorierte aliphatische Kohlenwasserstoffe verwendet werden.

3. Verfahren gemäss Anspruch 2, dadurch gekennzeichnet, dass 1,2-Dichloräthan oder Methylenchlorid verwendet wird.

4. Verfahren gemäss Anspruch 1, dadurch gekennzeichnet, dass die Eisensalze in einer Menge von 0,05 bis 20 Gew.% eingesetzt werden, bezogen auf das eingesetzte Polystyrol.

5. Verfahren gemäss Anspruch 1, dadurch gekennzeichnet, dass Eisenhalogenide als Katalysatoren eingesetzt werden.

6. Verfahren gemäss Anspruch 1, dadurch gekennzeichnet, dass die Reaktionstemperatur 0 bis 25°C beträgt.

7. Verfahren gemäss Anspruch 1, dadurch gekennzeichnet, dass die direkte Bromierung mit Brom oder Chlorbrom durchgeführt wird.

8. Verfahren gemäss Anspruch 1, dadurch gekennzeichnet, dass Eisensalze als Katalysatoren eingesetzt werden.

9. Verfahren gemäss Anspruch 1, dadurch gekennzeichnet, dass Eisen(II)oxalat, Eisen(III) phosphat oder Eisen(III)oxid als Katalysator eingesetzt werden.

**Claims**

1. A process for the manufacture of brominated products of polystyrene, said products containing at least 50% by weight of bromine, by direct bromination of polystyrene obtained by radically initiated polymerisation, in solution and in the presence of a Lewis acid catalyst at low temperature, which process comprises carrying out the bromination in a partially halogenated hydrocarbon as solvent, in the presence of a divalent and/or trivalent iron salt or oxide as catalyst, in the temperature range from −30°C to +30°C.

2. A process according to claim 1, wherein the solvent is a partially chlorinated aliphatic hydrocarbon.

3. A process according to claim 2, wherein the solvent is 1,2-dichloroethane or methylene chloride.

4. A process according to claim 1, wherein the iron salt is used in an amount of 0.05 to 20% by weight, based on the polystyrene.

5. A process according to claim 1, wherein an iron halide is used as catalyst.

6. A process according to claim 1, wherein the reaction temperature is in the range from 0 to 25°C.

7. A process according to claim 1, wherein the direct bromination is carried out with bromine or bromine chloride.

8. A process according to claim 1, wherein an iron salt is used as catalyst.

9. A process according to claim 1, wherein the catalyst is iron(II) oxalate, iron(III) phosphate or iron(III) oxide.

**Revendications**

1. Procédé de préparation de dérivés bromés du polystyrène contenant au moins 50% en poids de brome, par bromation directe d'un polystyrène préparé par polymérisation radicalaire, en solution, en présence d'un acide de Lewis comme catalyseur et à basse température, caractérisé en ce qu'on effectue la bromation dans des hydrocarbures partiellement halogénés, comme solvants, en présence de sels ou d'oxydes du fer bivalent et/ou de fer trivalent, comme catalysateurs, à des températures comprises entre −30 et +30°C.

2. Procédé selon la revendication 1, caractérisé en ce qu'on utilise des hydrocarbures aliphatiques partiellement chlorés.

3. Procédé selon la revendication 2, caractérisé en ce qu'on utilise le dichloro-1,2 éthane ou le chlorure de méthylène.

4. Procédé selon la revendication 1, caractérisé en ce que les sels de fer sont mis en jeu en une quantité de 0,05 à 20% en poids par rapport au polystyrène mis en jeu.

5. Procédé selon la revendication 1, caractérisé en ce qu'on utilise des halogénures de fer comme catalyseurs.

6. Procédé selon la revendication 1, caractérisé en ce que la température réactionnelle est comprise entre 0 et 25°C.

7. Procédé selon la revendication 1, caractérisé en ce que la bromation directe est effectuée avec du brome ou du chlorure de brome.

8. Procédé selon la revendication 1, caractérisé en ce qu'on utilise des sels de fer comme catalyseurs.

9. Procédé selon la revendication 1, caractérisé en ce qu'on utilise, comme catalyseur, l'oxalate de fer (II), le phosphate de fer (III) ou l'oxyde de fer (III).